# NEW EUROPEAN PATENT SPECIFICATION

(11) **EP 2 180 784 B2**
(45) Date of publication and mention of the opposition decision: **29.05.2019**
(45) Mention of the grant of the patent: 09.03.2011
(21) Application number: 08797600.7
(22) Date of filing: 11.08.2008
(51) Int. Cl.: A01N 25/04, A01N 25/30, A01N 25/22, A01N 43/40

(54) **STABLE EMULSION FORMULATION HINDERING INTERACTION ACROSS THE WATER-OIL INTERFACE**
FORMULIERUNG FÜR EINE STABILE EMULSION ZUR VERHINDERUNG VON ÜBERGÄNGEN AN EINER WASSER-ÖL-SCHNITTSTELLE
FORMULATION D'ÉMULSION STABLE EMPÊCHANT UNE INTERACTION À TRAVERS L'INTERFACE EAU-HUILE

(30) Priority: 30.08.2007 US 966793 P
(43) Date of publication of application: 05.05.2010
(60) Divisional application: 11157021.4
(73) Proprietor: Dow AgroSciences LLC, Indianapolis IN 46268-1054 (US)
(72) Inventor: LIU, Lei, Carmel, IN 46032 (US)
(74) Representative: Weickmann & Weickmann PartmbB
(86) International application number: PCT/US2008/072769
(87) International publication number: WO 2009/032481

(56) References cited:
- WO-A-01/87064
- WO-A1-95/07614
- WO-A1-02/067682
- US-A1- 2003 069 135
- Knowles A.: "New Developments in Crop Protection Product Formulation", AGROW REPORTS, no. DS243, May 2005 (2005-05), page 23-26, 61-64, T&F Informa UK Ltd, UK

## Description

This invention concerns a novel stable emulsion composition that hinders interactions across the oil-water interface between ingredients in the oil phase and those in the aqueous phase.

To design an agricultural formulation product, the most important question to be answered is its stability. Failure to meet a set of stability requirements which usually depend on the specific market, application and regulations will certainly lead to failure of its commercialization. There are many causes of formulation instabilities, such as a) chemical instabilities due to reactions between ingredients (actives and/or inei-ts, etc.), photo-degradations, and oxidations, etc., b) physical instabilities due to phase separations (Oswald ripening, crystallization, sedimentations, creamings, etc.) and c) environmental factors (temperature, humidity/moisture, etc.). In today's agrichemical market, it becomes increasingly common to design formulations to contain multiple active ingredients and their required solvents, safeners, and/or adjuvants, etc., in order to achieve the optimal spectrum, efficacy, and delivery efficiency, which consequently makes formulation stability more and more challenging. Therefore, technologies that can effectively isolate, hinder, or eliminate, adverse reactions or interactions between incompatible ingredients are often critical for a successful product.

The oil-in-water (normal) or water-in-oil (reverse/inverse) emulsion is one of the most common formulation types for many agricultural products, where droplets of oil or water stabilized by surfactant emulsifiers as a discrete phase are uniformly dispersed in water or oil media as a continuous phase. However, many challenges may exist, when oil ingredients or oil soluble ingredients may hydrolyze, or react with ingredients in the aqueous phase.

For example, a composition containing triclopyr butoxyethyl ester and the potassium salt of aminopyralid has been found to be extremely useful for the control of brush and woody plants in range and pasture and industrial vegetation management applications. However, in typical emulsion formulations with the oil-soluble ester herbicide and the water-soluble salt herbicide, the triclopyr butoxyethyl ester is susceptible to hydrolysis to the corresponding acid. As a result of the acid formation, the emulsion deteriorates due to crystal formation of both triclopyr and aminopyralid acids.

It would be desirable to have a stable emulsion formulation that provides a barrier to hinder or prevent the undesirable interactions between the internal oil phase and the continuous aqueous phase.

The present invention concerns a stable oil-in-water emulsion which comprises:
a) a discrete oil phase comprising
   a triclopyr ester;
b) a continuous aqueous phase comprising water, and water soluble or water dispersible ingredients;
c) a first polymeric surfactant comprising an ABA block copolymer having a hydrophilic portion of polyethylene oxide (PEG) and a hydrophobic portion of 12-hydroxystearic acid in an amount from 1 g/L to 200 g/L, and a second polymeric surfactant comprising a polyalkylene glycol ether in an amount from 1 g/L to 200 g/L; and
d) optionally, other inert formulation ingredients.

Another aspect of the present invention concerns a method of using the stable oil-in water emulsion and optionally diluting it in an aqueous spray mixture for agricultural applications, such as weed management, plant disease management, or insect pest management.

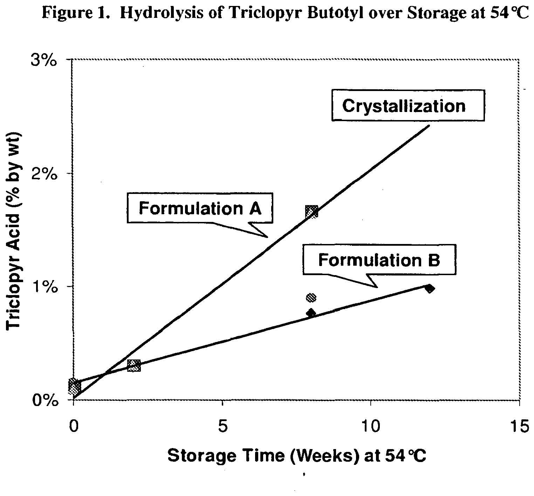

Figure 1 is a graphic illustration of a comparison of triclopyr butoxyethyl ester hydrolysis of a prior art Formulation A and a stabilized Formulation B of the present invention. Hydrolysis to triclopyr acid in Formulation A is significantly greater that of Formulation B upon accelerated stability tests at 54°C.

This invention provides an oil-in-water emulsion stabilized by a mixture of polymeric surfactants that hinders or prevents adverse interactions and reactions between ingredients of the discrete oil phase and those of the continuous aqueous phase, which may lead to chemical or physical instabilities of the composition.

The oil phase contains a triclopyr ester.

In a typical oil-in-water emulsion, the oil phase forms discrete droplets stabilized by emulsifiers that are suspended in a continuous aqueous phase. Interactions or reactions of the components in oil phase with those in aqueous phase include, but are not limited to, hydrolysis of a component in the oil phase, or degradation of a component in oil phase that is caused by the presence of other components in aqueous phase.

Oil miscible, oil soluble, or oil dispersible agricultural herbicides that can potentially undergo hydrolysis include, but are not limited to, esters of carboxylate, phosphate, or sulfate herbicides, including benzoic acid herbicides such as dicamba esters, phenoxyalkanoic acid herbicides such as 2,4-D, MCPA or 2,4-DB esters, aryloxyphenoxypropionic acid herbicides such as clodinafop, cyhalofop, fenoxaprop, fluazifop, haloxyfop and quizalofop esters, and pyridinecarboxylic acid herbicides such as fluroxypyr and triclopyr esters.

Optionally, oils used for solvent, diluent, or adjuvant purposes include, but are not limited to, petroleum fractions or hydrocarbons such as mineral oil, aromatic solvents, xylene, paraffinic oils, and the like; vegetable oils such as soy bean oil, rape seed oil, olive oil, castor oil, sunflower seed oil, coconut oil, corn oil, cotton seed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like.

For a formulation concentrate which may be further diluted at point of use, the discrete oil phase may range from 1 g/L to 800 g/L, preferably 10 g/L to 500 g/L, of the total composition. It is commonly known that this concentrated formulation may be diluted from 1 to 2000 fold at point of use depending on the agricultural practices.

The aqueous phase contains water as the solvent medium, and optionally water soluble or water dispersible active ingredients. Typically, water in the aqueous phase of the emulsion formulation is used to balance the final composition. Interactions or reactions of an ingredient in the aqueous phase with component(s) of the oil phase include, but are not limited to component in aqueous phase that is caused by the presence of a component in oil phase.

The first polymeric surfactant is comprised of an ABA block copolymer having a hydrophilic portion of polyethylene oxide (PEG) and a hydrophobic portion of 12-hydroxystearic acid. A preferred example of such a polymeric surfactant is the commercial surfactant Atlox™ 4912 (trademark of Uniqema), having a molecular weight of 5,000. Another example of such a polymeric surfactant is the commercial surfactant Termul™ 2510 (trademark of Huntsman). The first polymeric surfactant is present in an amount from 1 g/L to 200 g/L, preferably from 10 g/L to 100 g/L.

The second polymeric surfactant is comprised of a polyalkylene glycol ether. A preferred example of such a polymeric surfactant is the commercial surfactant AtlasTm G-5000 (EO-PO block copolymer; trademark of Uniqema). Another example of such a polymeric surfactant is the commercial surfactant Termul™ 5429 (alcohol alkoxylate; trademark of Huntsman). The second polymeric surfactant is present in an amount from 1 g/L to 200 g/L, preferably from 10 g/L to 100 g/L.

In a typical procedure for preparing the oil-in-water emulsion of the present invention, the aqueous phase is prepared by mixing water with water soluble or water dispersible ingredients including, but not limited to, actives, surfactant (polyalkylene glycol ether, e.g., Atlas G-5000), and optionally other inert ingredients such as thickeners, pH buffer, dispersant, wetting agent, biocide, etc. In case of a water-insoluble solid active (e.g. diflufenican, penoxsulam), the solid materials may be milled to a desirable size range (e.g. 0.1-10 µm) and preferably pre-dispersed in a concentrated aqueous dispersion with the help of wetting and dispersing agents. There are many commercially available milling and dispersing processes and equipment that can be used for this purpose which are well known to those skilled in the art. The oil phase is prepared by mixing the oil-soluble ABA block copolymer having a hydrophilic portion of polyethylene oxide (PEG) and a hydrophobic portion of 12-hydroxystearic acid (e.g., Atlox 4912) with oil miscible or soluble ingredients, including but not limited to, oil solvents, oil actives, oil soluble actives, oil adjuvants, oil safeners, etc. The final emulsion formulation is prepared by slowly adding the oil phase into the aqueous phase under high shear homogenization until the desired emulsion droplet size (0.1-10 µm) is achieved

An example of an emulsion in which the chemical instability is hydrolysis of an oil-soluble herbicidal ester by the interaction with the aqueous phase comprises:
a) a discontinuous oil phase comprising from 1 g/L to 700 g/L of triclopyr butoxyethyl ester;
b) a continuous aqueous phase comprising from 100 g/L to 990 g/L of water and from 1 g/L to 300 g/L of a salt of aminopyralid;
c) from 1 g/L to 200 g/L of a first polymeric surfactant comprising an ABA block copolymer having a hydrophilic portion of polyethylene oxide (PEG) and a hydrophobic portion of 12-hydroxystearic acid, and from 1 g/L to 200 g/L of a second polymeric surfactant comprising a polyalkylene glycol ether; and
d) optionally, other inert formulation ingredients.

In addition to the compositions and uses set forth above, the present invention also embraces the composition and use of these emulsions in combination with one or more additional compatible ingredients. Other additional ingredients may include, for example, one or more other pesticides, dyes, and any other additional ingredients providing functional utility, such as, for example, stabilizers, fragrants, viscosity-modifying additives, suspension aids, dispersants, and freeze-point depressants.

The following examples illustrate the present invention.

### Example 1 Hydrolysis of triclopyr butoxyethyl ester stored at 54°C

Formulation A, a comparative formulation containing 30.7 wt percent triclopyr butoxyethyl ester, 3.3 wt percent aminopyralid potassium salt, 9.65 wt percent Synperonic A2 (C₁₂-C₁₅ fatty alcohol ethoxylate 3EO), 6.4 wt percent Tensiofix 96DB08 (non-ionic EO-PO block copolymer) with water and Dowanol DPM making up the balance of the ingredients, and Formulation B, a formulation of the present invention containing 29.4 wt percent triclopyr butoxyethyl ester, 3.1 wt percent aminopyralid potassium salt, 2.9 wt percent Atlox 4912 (ABA block copolymer of poly-hydroxy-stearic acid copolymerized polyethylene glycol), 2.9 wt percent Atlas G-5000 (EO-PO block copolymer), 4.4 wt percent propylene glycol, with water, and minor ingredients such as methylcellulose (thickener), xanthan gum (thickener), antifoam, proxel GXL (biocide), monobasic and dibasic potassium phosphate (pH buffer) making up the balance of the ingredients, were stored at 54°C and monitored for hydrolysis of triclopyr butoxyethyl ester. Figure 1 compares the hydrolysis of triclopyr butoxyethyl ester to triclopyr acid of the two formulations at 54°C. The generation of triclopyr acid was 3-fold slower in Formulation B than that in Formulation A which indicates the combination of two polymeric surfactants, Atlox 4912 and Atlas G-5000, formed a much denser, tighter, or rigid interface that hindered the interaction and hydrolysis reaction between triclopyr butoxylethyl ester and water. As a result, Formulation B stays stable after 24 months at ambient or 6 months at 54°C, while Formulation A would form crystals of triclopyr acid and aminopyralid acid after -8 months at ambient or 2 months at 54°C.

## Claims

1. A stable oil-in-water emulsion which comprises:
a) a discrete oil phase comprising a triclopyr ester;
b) a continuous aqueous phase comprising water, and water soluble or water dispersible ingredients;
c) a first polymeric surfactant comprising an ABA block copolymer having a hydrophilic portion of polyethylene oxide (PEG) and a hydrophobic portion of 12-hydroxystearic acid in an amount from 1 g/L to 200 g/L, and a second polymeric surfactant comprising a polyalkylene glycol ether in an amount from 1 g/L to 200 g/L; and
d) optionally, other inert formulation ingredients.

2. The emulsion of claim 1 which comprises:
a) a discontinuous oil phase comprising from 1 g/L to 700 g/L of triclopyr butoxyethyl ester;
b) a continuous aqueous phase comprising from 100 g/L to 990 g/L of water and from 1 g/L to 300 g/L of a salt of aminopyralid;
c) from 1 g/L to 200 g/L of a first polymeric surfactant comprising an ABA block copolymer having a hydrophilic portion of polyethylene oxide (PEG) and a hydrophobic portion of 12-hydroxystearic acid, and from 1 g/L to 200 g/L of a second polymeric surfactant comprising a polyalkylene glycol ether; and
d) optionally, other inert formulation ingredients.

## Patentansprüche

1. Stabile Öl-in-Wasser-Emulsion, umfassend:
a) eine diskrete Öl-Phase, umfassend einen Triclopyrester;
b) eine kontinuierliche wässrige Phase, umfassend Wasser und wasserlösliche oder in Wasser dispergierbare Bestandteile;
c) ein erstes polymeres oberflächenaktives Mittel, umfassend ein ABA-Blockcopolymer mit einem hydrophilen Teil aus Polyethylenoxid (PEG) und einem hydrophoben Teil aus 12-Hydroxystearinsäure in einer Menge von 1 g/l bis 200 g/l, und ein zweites polymeres oberflächenaktives Mittel, umfassend einen Polyalkylenglykolether in einer Menge von 1 g/l bis 200 g/l; und
d) optional andere inerte Formulierungsbestandteile.

2. Emulsion nach Anspruch 1, umfassend:
a) eine diskontinuierliche Öl-Phase, umfassend 1 g/l bis 700 g/l Triclopyrbutoxyethylester;
b) eine kontinuierliche wässrige Phase, umfassend von 100 g/l bis 990 g/l Wasser und von 1 g/l bis 300 g/l eines Salzes von Aminopyralid;
c) von 1 g/l bis 200 g/l eines ersten polymeren oberflächenaktiven Mittels, umfassend ein ABA-Blockcopolymer mit einem hydrophilen Teil aus Polyethylenoxid (PEG) und einem hydrophoben Teil aus 12-Hydroxystearinsäure und von 1 g/l bis 200 g/l, und eines zweiten polymeren oberflächenaktiven Mittels, umfassend einen Polyalkylenglykolether; und
d) optional andere inerte Formulierungsbestandteile.

## Revendications

1. Emulsion stable de type huile-dans-eau, qui comprend :
a) une phase huileuse discontinue, comprenant un ester de triclopyr ;
b) une phase aqueuse continue, comprenant de l'eau et des ingrédients hydrosolubles ou dispersables dans l'eau ;
c) un premier tensioactif polymère, comprenant un copolymère à blocs de type ABA qui comporte une partie hydrophile constituée de poly(oxyde d'éthylène) (PEG) et une partie hydrophobe à base d'acide 12-hydroxy-stéarique, et présent en une concentration de 1 à 200 g/L, et un deuxième tensioactif polymère, comprenant un éther de polyalkylèneglycol et présent en une concentration de 1 à 200 g/L ;
d) et en option, d'autres ingrédients de formulation inertes.

2. Emulsion conforme à la revendication 1, qui comprend :
a) une phase huileuse discontinue, comprenant de 1 à 700 g/L d'ester butoxy-éthylique de triclopyr ;
b) une phase aqueuse continue, comprenant de 100 à 990 g/L d'eau et de 1 à 300 g/L d'un sel d'aminopyralide ;
c) de 1 à 200 g/L d'un premier tensioactif polymère, comprenant un copolymère à blocs de type ABA qui comporte une partie hydrophile constituée de poly(oxyde d'éthylène) (PEG) et une partie hydrophobe à base d'acide 12-hydroxy-stéarique, et de 1 à 200 g/L d'un deuxième tensioactif polymère, comprenant un éther de polyalkylèneglycol ;
d) et en option, d'autres ingrédients de formulation inertes.
